# EUROPEAN PATENT APPLICATION

(11) **EP 4 549 177 A1**
(43) Date of publication of application: **07.05.2025**
(21) Application number: 24209428.2
(22) Date of filing: 29.10.2024
(51) Int. Cl.: B60G 7/00, B62D 29/00

(54) **REINFORCED STRUCTURAL MEMBER FOR A MOTOR VEHICLE**

(30) Priority: 31.10.2023 IT 202300022878
(71) Applicant: FERRARI S.p.A., 41100 Modena (IT)
(72) Inventor: MERULLA, Andrea, 41100 MODENA (IT); PINNA, Franco Carlo, 41100 MODENA (IT); BONGIORNI, Lorenzo, 41100 MODENA (IT); CHIARBONELLO, Maurizio, 41100 MODENA (IT); ANNEQUIN-DIGOND, Thierry, 41100 MODENA (IT)
(74) Representative: Studio Torta S.p.A.

(57) **Abstract**

A structural member (7, 2) for a motor vehicle (1) includes at least one wall (8) at least partially enclosing a cavity (9) and a lattice structure (11) attached to the wall so as to form a single body with the wall (8) and arranged to at least partially fill the cavity (9), the structural member being characterized in that the lattice structure (11) comprises at least one elementary cell with gyroid geometry (12).

## Description

### CROSS-REFERENCE TO RELATED APPLICATIONS

This patent application claims priority from Italian patent application no. 102023000022878 filed on October 31, 2023, the entire disclosure of which is incorporated herein by reference.

### TECHNICAL FIELD

The invention relates to a member with structural function for a motor vehicle, for example a suspension lever or a portion of frame.

### BACKGROUND ART

As is known, some structural members of a motor vehicle, including the suspension levers or portions of the frame, can be obtained by additive manufacturing.

Typically, additive manufacturing processes and especially those aimed at the production of thin walls, in particular with hollow or concave geometries (hollow geometries in thin wall), include the construction of additional supports to support the layers of the product during its manufacture.

The supports are designed to be removed at the end of the additive manufacturing process and therefore do not have particular properties of resistance, but on the contrary are essentially unsuitable to have a structural function.

Therefore, the supports are usually constructed with an essentially light and fragile lattice structure, so as to facilitate their mechanical removal.

On the other hand, in some cases, a part of the supports must advantageously be positioned in areas of the product such as to be unreachable or in any case irremovable at the end of the additive manufacturing process.

In this way, the supports give the product additional weight, which, although not large, is substantially useless for the structural function that the product is to have in the motor vehicle.

In other words, the product is unnecessarily weighed down by the unremoved supports. This constitutes a drawback for which a suitable solution is sought.

The object of the invention is to provide a solution to the aforesaid drawback, preferably in a simple and reliable manner.

### SUMMARY OF THE INVENTION

According to the invention, the object is achieved by a structural member as defined in claim 1.

The dependent claims set forth particular embodiments of the invention.

### BRIEF DESCRIPTION OF THE DRAWINGS

Hereunder, for a better understanding of the invention, an embodiment will be described by way of non-limiting example, with reference to the accompanying drawings, wherein:
- Fig. 1 is a perspective view of a motor vehicle comprising the structural member according to the invention,

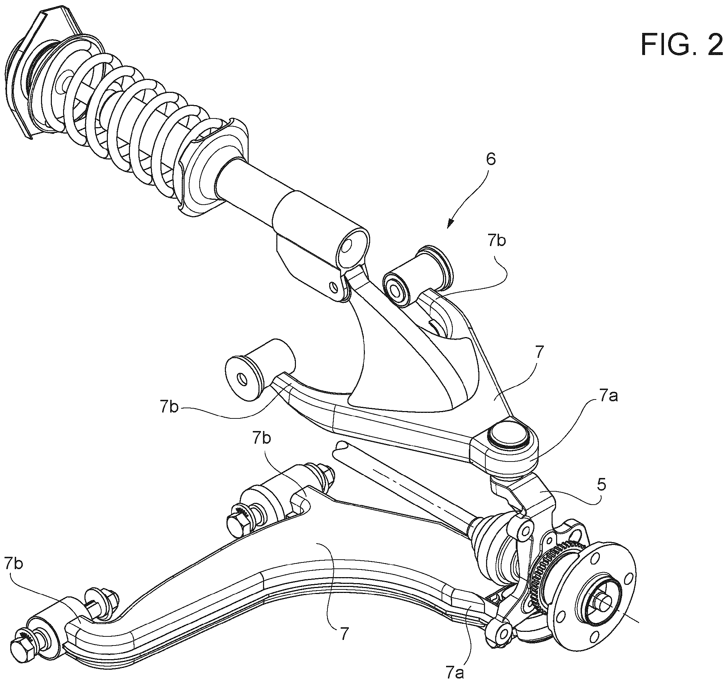

- Fig. 2 is a perspective view, in an enlarged scale, of a suspension of the motor vehicle of Fig. 1 with the structural member in view,
- Fig. 3 shows, in a simplified manner, an elementary cell with gyroid geometry, which is part of a lattice structure of the structural member, and

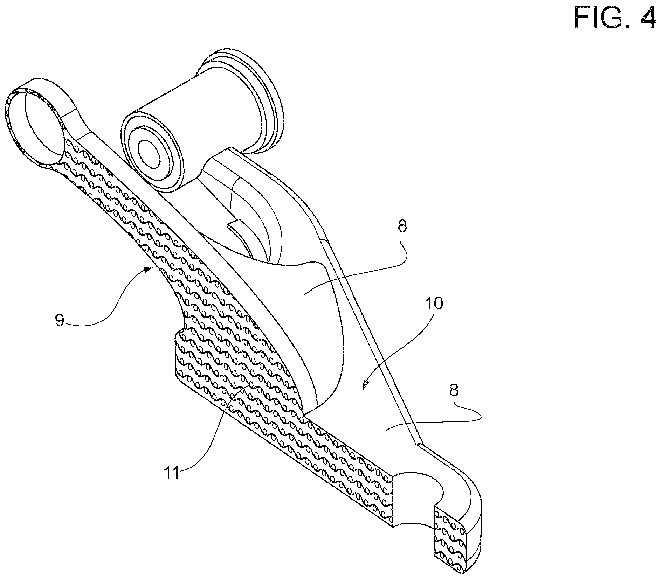

- Fig. 4 is a cross section, in a further enlarged scale, of the structural member with the lattice structure in view.

### DETAILED DESCRIPTION OF EMBODIMENTS OF THE INVENTION

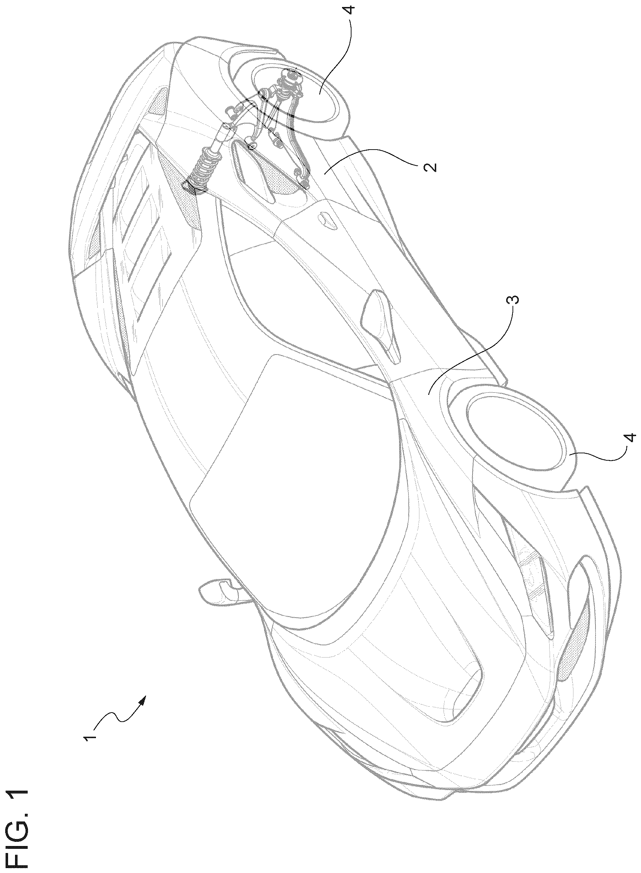

In Fig. 1, the reference number 1 indicates, as a whole, a motor vehicle.

The motor vehicle 1 has a frame 2 and a body 3.

The frame 2 constitutes the skeleton of the motor vehicle 1 and has a structural function, i.e., configured to support the other components of the motor vehicle 1.

In fact, the body 3 is supported by the frame 2 and covers the frame 2, thereby defining the outer surfaces of the motor vehicle 1.

Moreover, the motor vehicle 1 has a plurality of wheels 4 destined to contact the road and carried rotating around respective rotation axes by respective knuckles 5.

The knuckles 5, just as the wheels 4, are part of the so-called unsprung mass of the motor vehicle 1.

The knuckles 5 are in turn suspended relative to the frame 2 through suspensions 6 of the motor vehicle 1.

At least two of the knuckles 5 are coupled to the suspensions 6 so as to be able to be rotated around directions transverse to the road or substantially vertical, i.e., so as to transmit to the relative wheels 4 a steering command through a steering apparatus of the motor vehicle 1, for example of known type and not illustrated. For this reason, these knuckles 5 are steering knuckles.

At times, the knuckles 5, especially the steering knuckles, are also called knuckle spindles or suspension uprights in technical jargon.

The suspensions 6 comprise at least one suspension lever or arm 7 having at least one end 7a coupled, for example hinged, to one of the knuckles 5, and one end 7b coupled, for example hinged, to the frame 2.

The lever 7 has a structural function as it is stressed through the knuckle 5 by the loads acting on the relative wheel 4 during use of the motor vehicle 1.

In other words, just as the components of the frame 2, the lever 7 is configured to support operating loads deriving from the use of the motor vehicle 1, and the weight of the component carried by the frame 2.

The operating loads, which are those transmitted starting from the contact between the wheels 4 and the road, are in fact applied to the lever 7 and to the frame 2, i.e., they "pass through" the lever 7 and the components of the frame 2, which are therefore designed to withstand these operating loads.

Conversely, the components of the body 3, just as other components and devices of the motor vehicle 1 carried by the frame 2, are not stressed by the operating loads deriving from contact between the wheels 4 and the road. In fact, the components of the body 3 and the other components carried by the frame 2 form the weight that the frame 2 must support and with which it is stressed.

In particular, to stress means to apply a load to a member so as to be able to potentially deform it, as a function of its stiffness and resistance.

Therefore, the components of the frame 2 and the lever 7 are structural members of the motor vehicle 1, i.e., members with structural function.

In general, the structural members are those stressed by the operating loads deriving from the contact between the wheels 4 and the road during use of the motor vehicle 1 and/or from the weight of the other members or devices carried by these structural members.

The structural members are configured or designed to withstand the loads with which they will be stressed during use.

Hereinafter, the lever 7 will be treated as an example of structural member according to the invention, although other examples can include other members of the motor vehicle 1, such as components of the frame 2.

Therefore, the lever 7 may in general be conceptually replaced by a generic structural member or more precisely by a component of the frame 2.

The lever 7 comprises one or more walls 8 configured to enclose, or enclosing, at least partially or totally, a cavity 9.

Each of the walls 8 or at least one of them is preferably a thin wall or a panel, in the sense that it has a thickness or dimension of thickness significantly lower than the other two dimensions thereof.

More precisely, the thickness could be less than 1 mm.

Specifically, the lever 7 comprises a shell 10, which the walls 8 are part of or constituted by the walls 8; in other words, the shell 10 internally defines the cavity 9.

In particular, the shell 10 is closed, to completely enclose the cavity 9, more in particular between the walls 8.

The lever 7 comprises between the walls 8 of the shell 10, or inside the cavity 9, a core defined by a lattice structure 11, in particular of elementary cell type.

In other words, the lattice structure 11 consists of a plurality of interconnected elementary cells 12. Specifically, the elementary cells 12 are all the same as one another and replicated side by side, i.e. adjacent to one another, to form the lattice structure 11.

The lattice structure 11 is attached to one or more, or to all, of the walls 8, so as to form a single body with the walls 8 to which it is attached.

Preferably, the shell 10 is a single body and forms a single body with the lattice structure 11.

In other words, the lattice structure 11 is connected with the walls 8, in particular of the shell 10, seamlessly, i.e., in an integral and/or coherent and/or indistinguishable manner.

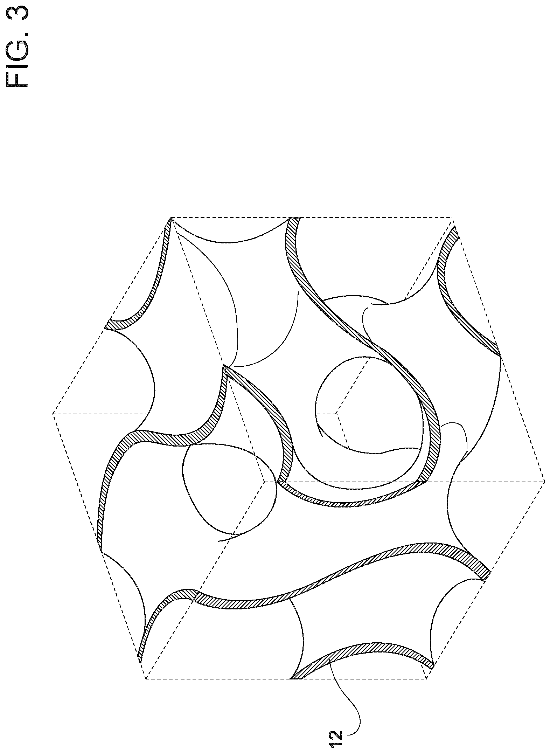

According to the invention, at least one of the elementary cells 12 forming the lattice structure 11 has a gyroid or gyroidal geometry, a simplified example of which is shown in Fig. 3.

The gyroid geometry allows the elementary cells 12 to be self-supported on the walls 8, i.e., they do not require further elements or structures to be supported.

In more detail, several elementary cells 12 adjacent to one another have gyroid geometry, so that the lattice structure 11 has at least one portion defined by a gyroidal or gyroid structure.

In even more detail, all the elementary cells 12 of the lattice structure 11 have gyroid geometry, so that the lattice structure 11 is constituted (entirely) by the gyroid structure, where the elementary cells with gyroid geometry are interconnected to form the lattice structure 11.

In general, gyroid structures are elementary cell structures that have, per se, a three-dimensional geometry, defined by two-dimensional wavy lines that intersect, distinguished by a very large surface area and by minimized cross-sections. In particular, gyroid structures have an orthotropic behaviour.

By way of example, reference can be made to the text available at the link https://www.sciencedirect.com/science/article/pii/S02641275193 00176#s0055 (Materials & Design, Volume 165, 5 March 2019, 107597, "Mechanical properties of 3D printed polymeric Gyroid cellular structures: Experimental and finite element study").

The elementary cell with gyroid geometry is one of the elementary cells of the gyroid structure.

Preferably, the lattice structure 11 (here in particular defined by a gyroid structure) extends for the whole of the cavity 9, thereby supporting in particular the outer surface of the walls 8, the thickness of which can thus be minimized. In other words, the lattice structure 11 or the totality of its elementary cells 12 fills the whole cavity 9 or occupies the whole space of the cavity 9 (in any case considering the empty spaces provided by the geometry of the elementary cells 12).

Given the structural function of the lever 7, the lattice structure 11 is advantageously metallic, i.e., it comprises a metal, or is constituted by metal or metal alloy. This (the fact of being metallic or being constituted by metal or metal alloy) can also apply advantageously for the lever 7, or for the shell 10 or each of the walls 8, independently.

Given the complexity of the shape of the gyroid structures, these are usually manufactured through additive manufacturing techniques.

Therefore, a manufacturing process of the lever 7 is preferably an additive manufacturing process.

In the present case, although not necessarily, the lever 7 and hence the lattice structure 11 (gyroid) is manufactured with the technique called L-PBF, "Laser Powder Bed Fusion".

In brief, in this manufacturing technology, each layer of the product (here the lever 7 or more in general the structural member) is produced by directing a laser beam on the bed of powders, for example metallic powders, as in the non-limiting case in hand.

In this case, preferably, the material of the lattice structure 11 (or of the lever 7, or of the shell 10 or of the wall 8) is an aluminium alloy, such as ALSi10Mg, or possibly with alloys of the series 6xxx or 5xxx.

With respect to other types of lattice structures with elementary cells (for example honeycomb), gyroid structures have cells that are "open" and consequently communicating with one another.

Given the same resistance to shear, bending and compression actions, and given the same dimensions, if compared with honeycomb structures, the gyroid structure uses a smaller amount of material, i.e., is formed of partitions/ribs of lower thickness. Therefore, is it lighter: for example, the weight of the gyroid lattice structure 11 can be approximately 80%, or even lower, relative to the weight of a honeycomb structure comparable in resistance and dimensions. To summarize, the gyroid structure allows a combination of very advantageous structural features of resistance and lightness.

In the additive manufacturing process of the lever 7, or more in general of the structural member, the lattice structure 11 is used in place of the supports commonly used in similar additive manufacturing processes.

The lever 7 is modelled together with the lattice structure 11 on or through a computer program for computer-aided product modelling (such as a CAD - Computer Aided Design - or CAE - Computer Aided Engineering, program), so that the model of the lever 7 with the lattice structure 11 is available or exportable in a suitable format (for example the typical STL format for additive manufacturing) to be input into an additive manufacturing machine.

Once the model has been input, the additive manufacturing machine can be set, for example, not to produce supports completely or to not produce supports inside the cavity 9.

At this point, the additive manufacturing machine produces the lever 7 with the lattice structure 11 inside or at the cavity 9.

From the above it is evident how the use of a gyroid structure allows the lever 7 or, more generally, the structural member of the motor vehicle 1, to be reinforced.

In fact, in place of useless supports, the lattice structure 11 considerably increases the resistance of the structural member, without any significant influence on its weight.

Conversely, due to the increase in resistance, the shell 10 or the walls 8 can be lightened, so that the overall balance of the weight of the structural member is favourable.

The lattice structure 11 can perform the function of the supports during the additive manufacturing process of the structural member. For this reason, the inner supports are superfluous or rather functionally integrated, as mentioned above.

Finally, from the foregoing it is evident that modifications and variations can be made to the structural member according to the invention without departing from the scope of protection of the invention, as defined in the appended claims.

In particular, the shape and the dimensions of the structural member could differ from those illustrated.

## Claims

1. A structural member (7, 2) for a motor vehicle (1), the structural member comprising at least one wall (8) configured to at least partially enclose a cavity (9) and a lattice structure (11) attached to the wall so as to form a single body with the wall (8) and arranged to at least partially fill the cavity (9), the structural body being **characterized in that** the lattice structure (11) comprises at least one elementary cell with gyroid geometry (12).

2. The structural member according to claim 1, wherein the lattice structure (11) comprises a gyroid structure defined by elementary cells with gyroid geometry (12) interconnected to form the lattice structure (11).

3. The structural member according to claim 1 or 2, wherein the wall (8) is part of an enclosed shell (10) internally defining said cavity (9).

4. The structural member according to claim 3, wherein the lattice structure (11) extends through the whole said cavity (9) .

5. The structural member according to any of the preceding claims, wherein the lattice structure (11) is metallic.

6. The structural member according to any one of the preceding claims, wherein the wall (8) is metallic.

7. Frame (2) for a motor vehicle (1), the frame comprising at least one component defined by the structural member according to any one of the preceding claims.

8. Suspension (6) for a motor vehicle (1), the suspension comprising at least one component defined by the structural member according to any one of claims 1 to 6.

9. The suspension according to claim 8, wherein the structural member is defined by a suspension lever (7).

10. Motor vehicle (1) comprising the frame (2) according to claim 7 and/or the suspension (6) according to claim 8 or 9.
